# EUROPÄISCHE PATENTANMELDUNG

(11) **EP 2 253 359 A1**
(43) Veröffentlichungstag der Anmeldung: **24.11.2010**
(21) Anmeldenummer: 09006807.3
(22) Anmeldetag: 20.05.2009
(51) Int. Cl.: A63F 13/02

(54) **Körperpflegegerät des persönlichen Bedarfs**

(71) Anmelder: Braun GmbH, 61476 Kronberg/Taunus (DE)
(72) Erfinder: Schmid, Michael, 60599 Frankfurt/Main (DE); McGarry, Rory, 60385 Frankfurt/Main (DE); Stegmann, Wolfgang, 60389 Frankfurt/Main (DE); Phong Vu, Duy, 65824 Schwalbach (DE); Heil, Benedikt, 61239 Ober-Mörlen (DE); Stratmann, Martin, 60318 Frankfurt/Main (DE); Schaefer, Norbert, 60320 Frankfurt/Main (DE); Kunath, Ivo, 61476 Kronberg/Taunus (DE); Vetter, Ingo, 61184 Karben (DE); Fischer, Vladimir, 65843 Sulzbach (DE)

(57) **Zusammenfassung**

Die vorliegende Erfindung betrifft ein Körperpflegegerät des persönlichen Bedarfs, insbesondere in Form einer Zahnbürste, mit einem handführbaren Pflegewerkzeug, insbesondere Zahnbürste, einer Basisstation zum Ablegen und/oder Laden des Pflegewerkzeugs, sowie einer Anzeigevorrichtung zur Anzeige von interaktiven Darstellungen, die mittels einer Steuervorrichtung vom dem Pflegewerkzeug her interaktiv steuerbar sind. Erfindungsgemäß bildet die Anzeigevorrichtung einen von der Basisstation und dem Pflegewerkzeug separat ausgebildeten und separat positionierbaren Baustein, der eine Kommunikationsschnittstelle zur Kommunikation mit der Basisstation und/oder mit dem Pflegewerkzeug auch im separaten Zustand aufweist. Durch Ausbildung der Anzeigevorrichtung als Stand-alone-Modul kann die Anzeigevorrichtung unabhängig von der Position der Basisstation an den für ein Kind oder auch einen Erwachsenen gut einsehbaren Platz positioniert werden, so dass die Sichtbarkeit auch beim bestimmungsgemäßen Hin- und Herbewegen des Pflegewerkzeugs - im Falle einer Zahnbürste entsprechend den Putzbewegungen im Mund - gut einsehbar ist. Trotzdem kann die Bildschirmdarstellung vorzugsweise in Form eines Videospiels interaktiv von dem Pflegewerkzeug her über die Kommunikationsschnittstelle des Displays gesteuert werden.

## Beschreibung

Die vorliegende Erfindung betrifft ein Körperpflegegerät des persönlichen Bedarfs, insbesondere in Form einer Zahnbürste, mit einem handführbaren Pflegewerkzeug, insbesondere Zahnbürste, einer Basisstation zum Ablegen und/oder Laden des Pflegewerkzeugs, sowie einer Anzeigevorrichtung zur Anzeige von interaktiven Darstellungen, die mittels einer Steuervorrichtung vom dem Pflegewerkzeug her interaktiv steuerbar sind.

Um den Anreiz zum regelmäßigen Zähneputzen zu erhöhen, werden mittlerweile an Zahnputzvorrichtungen Bildschirme bzw. Displays vorgesehen, auf denen Videospiele dargestellt werden, die von der Zahnbürste her interaktiv gesteuert werden können. Durch den zusätzlich gegebenen Unterhaltungswert werden insbesondere Kinder dazu motiviert, regelmäßig ihre Zähne zu putzen. Alternativ oder zusätzlich zu reinen Unterhaltungsspielen können dabei auch Anleitungen zum effizienten und wirksamen Reinigen der Zähne dargestellt werden, beispielsweise dergestalt, dass der Zahnbürstenbenutzer die dargestellten Bildsequenzen nacharbeitet.

Beispielsweise beschreibt die WO 2007/112112 A1 eine Zahnputzvorrichtung, bei der an der Basisstation zum Laden der Zahnbürste ein Bildschirm vorgesehen ist, auf dem während des Zähneputzens Videospiele gezeigt werden. Das Videospiel ist hierbei von der Zahnbürste her steuerbar. Einerseits besitzt die Zahnbürste manuell betätigbare Eingabetasten zur Eingabe von Steuerbefehlen für das Videospiel. Andererseits werden an der Zahnbürste mittels diverser Sensoren Putzparameter wie Anpressdruck und bei den Putzbewegungen auftretende Beschleunigungen erfasst, wobei anhand dieser erfassten Parameter das Videospiel auf dem Bildschirm gesteuert wird. Um für einen jeweiligen Benutzer ein jeweils geeignetes Videospiel zu zeigen, wird das Aufsatzteil der Zahnbürste anhand eines Identiflkationscodes identifiziert, in Abhängigkeit dessen das Videospiel oder dessen Spielregeln ausgewählt werden. Auch wenn hierdurch eine gewisse Anpassung an den individuellen Nutzer gewährleistet ist, ist der Grad der Personalisierung sowie die Anpassbarkeit an die jeweiligen Bedürfnisse begrenzt.

Aus der US 2008/0102953 A1 ist ebenfalls eine Zahnbürste bekannt, die als Eingabevorrichtung zur Steuerung einer Spielekonsole ausgebildet ist, um darauf ein Videospiel zu steuern. Ein an der Bürste angebrachter Sensor detektiert Bürstenbewegungen, wobei anhand der Bewegungssignale der Zahnbürste die Bewegung eines virtuellen Spieleobjekts des Videospiels gesteuert wird.

Die US 2006/0040246 A1 beschreibt eine elektrische Zahnbürste, die an einer Basisstation abstellbar und ladbar ist. Die Basisstation enthält ein Display, auf dem ein interaktives Spiel wie beispielsweise PAC-MAN^{®} dargestellt wird. Die Zahnbürste kommuniziert drahtlos mit der Steuervorrichtung zur Steuerung des Spiels, das durch Abnehmen der Zahnbürste von der Basisstation oder einen an der Zahnbürste angebrachten Startknopf aktiviert wird. Sensoren an der Zahnbürste erfassen deren Bewegungen, die zur Steuerung von Bewegungen von Spielcharakteren bzw. Spieleteilen auf dem Bildschirm verwendet werden. Um verschiedene Spiele ausführen zu können, können verschiedene Speicherbausteine eingesetzt werden. Je geschickter das auf dem Bildschirm dargestellte Spiel gespielt wird, desto mehr Gewinnpunkte werden dem Nutzer zugeschrieben.

Aus der DE 10153863 A1 ist eine Zahnbürste bekannt, an deren Schaftende ein kugelförmiges Displayteil aufsteckbar ist, auf dem die mittels Sensoren erfassten Putzergebnisse angezeigt werden oder nach erfolgreichem Putzvorgang ein Spiel für Kinder dargestellt werden kann. Eine interaktive Steuerung des auf dem Display dargestellten Spiels von der Zahnbürste her ist allerdings nicht vorgesehen, vielmehr erfolgt eine Steuerung des auf dem Display dargestellten Programms durch am Displayteil selbst angeordnete Eingabetasten, so dass der Unterhaltungswert und der Lerneffekt begrenzt sind. Das eigentliche Display im Displayteil ist hierbei in die kugelförmige Gestalt des Displayteils eingefügt und mit einer kalottenförmigen, durchsichtigen Abdeckung aus kratz- und säurefestem Kunststoff abgedeckt.

Weitere Zahnputzvorrichtungen mit einem Display, auf dem interaktiv steuerbare Spiele dargestellt werden, zeigen die Schriften US 2008/0141478 und US 2008/0141476, wobei mehrere Zahnbürsten miteinander kommunizieren können, um Spiele wie beispielsweise "Stein, Schere, Blatt" im Wettbewerb gegeneinander spielen zu können. Die Displays sind hierbei jedoch am Handstück der Zahnbürste selbst angebracht, so dass ein das richtige Zähneputzen unterstützendes Spiel während des Putzens nicht gespielt werden kann.

Der vorliegenden Erfindung liegt die Aufgabe zugrunde, ein verbessertes Körperpflegegerät der eingangs genannten Art zu schaffen, das Nachteile des Standes der Technik vermeidet und Letzteren in vorteilhafter Weise weiterbildet. Insbesondere soll die interaktive Steuerbarkeit des auf dem Display dargestellten Spiels im Bedienungskomfort verbessert und die Interaktion zwischen verschiedenen Gerätebenutzem und der Anzeigevorrichtung erleichtert werden.

Diese Aufgabe wird erfindungsgemäß durch ein Körperpflegegerät gemäß Anspruch 1 gelöst. Bevorzugte Ausgestaltungen der Erfindung sind Gegenstand der abhängigen Ansprüche.

Es wird vorgeschlagen, die Anzeigevorrichtung trotz ihrer Steuerbarkeit von dem Pflegewerkzeug her weder fest an der Basisstation noch fest am Pflegewerkzeug anzuordnen, sondern sozusagen frei platzierbar auszubilden, so dass es an der jeweils günstigsten Stelle abgestellt werden kann. Erfindungsgemäß bildet die Anzeigevorrichtung einen von der Basisstation und dem Pflegewerkzeug separat ausgebildeten und separat positionierbaren Baustein, der eine Kommunikationsschnittstelle zur Kommunikation mit der Basisstation und/oder mit dem Pflegewerkzeug auch im separaten Zustand aufweist. Durch Ausbildung der Anzeigevorrichtung als Stand-alone-Modul kann die Anzeigevorrichtung unabhängig von der Position der Basisstation an den für ein Kind oder auch einen Erwachsenen gut einsehbaren Platz positioniert werden, so dass die Sichtbarkeit auch beim bestimmungsgemäßen Hin- und Herbewegen des Pflegewerkzeugs - im Falle einer Zahnbürste entsprechend den Putzbewegungen im Mund - gut einsehbar ist. Trotzdem kann die Bildschirmdarstellung vorzugsweise in Form eines Videospiels interaktiv von dem Pflegewerkzeug her über die Kommunikationsschnittstelle des Displays gesteuert werden. Hierzu kann das Pflegewerkzeug eine Kommunikationsverbindung direkt zu dem Anzeigebaustein besitzen oder damit indirekt über die Basisstation kommunizieren.

Um trotz beliebiger Platzierbarkeit der Anzeigevorrichtung ohne von der Basisstation abhängigen Aktionsradius eine einfache und effiziente Energieversorgung der Anzeigevorrichtung zu erzielen, ist in vorteilhafter Weiterbildung der Erfindung die Anzeigevorrichtung mit einem ladbaren Energiespeicher versehen, der durch Andocken der Anzeigevorrichtung an die Basisstation ladbar ist. Hierzu besitzt die Anzeigevorrichtung vorteilhafterweise eine Energie übertragende Kupplungseinrichtung, die mit einer an der Basisstation vorgesehenen Kupplungseinrichtung in Wirkverbindung bringbar ist. Die Anzeigevorrichtung und die Basisstation besitzen zueinander kompatible Ladeanschlüsse, über die der Energiespeicher in der Anzeigevorrichtung von der Basisstation her geladen werden kann.

Vorteilhafterweise arbeitet hierbei die genannte Energie übertragende Kupplungseinrichtung zum Laden des Energiespeichers der Anzeigevorrichtung berührungsfrei, obgleich prinzipiell auch mechanisch verbindbare Ladeanschlüsse vorgesehen sein können. Insbesondere kann in Weiterbildung der Erfindung die Anzeigevorrichtung einen induktiven Ladeanschluss zum induktiven Laden von der Basisstation her besitzen, wobei Letztere ebenfalls einen induktiven Ladeanschluss besitzt, der mit dem anzeigeseitigen induktiven Ladeanschluss kompatibel ist. Durch das Vorsehen miteinander kommunizierender Ladespulen am Display und an der Basisstation brauchen keine mechanischen Anschlüsse zum Laden des Displays verbunden werden. Zudem kann der induktive Ladeanschluss an der Anzeigevorrichtung und/oder an der Basisstation durch eine Abdichtung vorzugsweise feuchtigkeitsdicht geschützt werden, insbesondere unter einem Gerätegehäuse angeordnet werden, so dass ein Betrieb auch in Feuchtigkeit aufweisenden Räumen wie Bädern und Duschzimmern problemlos möglich ist.

In Weiterbildung der Erfindung sind sowohl die Anzeigevorrichtung als auch das Pflegewerkzeug an der Basisstation aufladbar. Grundsätzlich ausreichend kann es sein, wenn die Basisstation hierzu nur einen Ladeanschluss besitzt, wenn die damit kommunizierenden Ladeanschlüsse an der Anzeigevorrichtung und dem Pflegewerkzeug entsprechend gleichartig ausgebildet sind, so dass wahlweise das Pflegewerkzeug oder die Anzeigevorrichtung geladen werden können.

Vorteilhafterweise besitzt die Basisstation jedoch zwei separate Ladeanschlüsse, von denen einer mit der Anzeigevorrichtung und ein anderer mit dem Pflegewerkzeug in Wirkverbindung bringbar ist, so dass die Anzeigevorrichtung und das Pflegewerkzeug gleichzeitig ladbar sind.

Vorteilhafterweise sind sowohl der Ladeanschluss für die Anzeigevorrichtung als auch der Ladeanschluss für das Pflegewerkzeug induktiv arbeitend ausgebildet, insbesondere mit einer Ladespule versehen, die mit einem dazu passenden Ladeteil an der Anzeigevorrichtung bzw. dem Pflegewerkzeug in Strom übertragende Verbindung bringbar ist.

Hierdurch kann sowohl die Anzeigevorrichtung als auch das Pflegewerkzeug im Ruhezustand bzw. Nichtbetrieb an der Basisstation abgestellt bzw. abgelegt werden, so dass sie im Ruhezustand geladen werden. Für den Betrieb können das Pflegegerät wie beispielsweise die Zahnbürste und auch das Display von der Basisstation abgenommen werden, um unabhängig von der Basisstation arbeiten zu können. Vorteilhafterweise kann die Anzeigevorrichtung auch dann, wenn sie an die Basisstation angedockt ist, betrieben werden und/oder mit dem Pflegewerkzeug in Kommunikation treten, so dass die Anzeigevorrichtung wahlweise auf der Basisstation oder unabhängig von dieser betrieben werden kann. Ein Betrieb auf der Basisstation kann beispielsweise dann, wenn der Energiespeicher der Anzeigevorrichtung nur schwach geladen ist, von Vorteil sein.

Die Anzeigevorrichtung besitzt in Weiterbildung der Erfindung einerseits Aufstandsmittel zum Abstellen auf einer ebenen Fläche sowie andererseits an die Basisstation formangepasste Lagermittel zur passgenauen Lagerung des Displays an der Basisstation. Über die genannten formangepassten Lagermittel kann die Anzeigevorrichtung vorteilhafterweise formschlüssig an die Basisstation angedockt werden. In Weiterbildung der Erfindung können hierbei die zuvor genannten Aufstandsmittel zum Abstellen auf einer ebenen Fläche und die Lagermittel zum Andocken an die Basisstation ineinander integriert sein und/oder gegenseitig ergänzend ausgebildet sein. Beispielsweise können vorspringende Abstellfüße in dazu komplementär ausgebildete Aufnahmemulden an der Basisstation eingesetzt werden.

Um die Sendeleistungen niedrig halten zu können und keinen großen Datenverkehr zu erfordern, kann in vorteilhafter Weiterbildung der Erfindung ein Spielecontroller zur Steuerung eines an der Anzeigevorrichtung anzeigbaren Videospiels in die Anzeigevorrichtung integriert sein, so dass über die Kommunikationsschnittstelle lediglich Steuerbefehle zum interaktiven Steuern des Spiels übertragen werden müssen. Die übertragenen Steuerbefehle, die von dem Pflegewerkzeug her kommen, werden durch den Spielecontroller unmittelbar an der Anzeigevorrichtung verarbeitet, auch wenn diese von der Basisstation entfernt angebracht ist.

In alternativer Weiterbildung der Erfindung kann jedoch auch vorgesehen sein, dass die Basisstation und/oder auch das Pflegewerkzeug einen Spielecontroller enthält, der zumindest einen Teil der an dem Pflegewerkzeug erzeugten Steuerbefehle abarbeitet und in Grafikbefehle transformiert, die direkt oder mittelbar über die Basisstation auf die Anzeigevorrichtung übertragen werden.

Die auf dem Display der Anzeigevorrichtung darstellbaren Spiele können hierbei grundsätzlich unterschiedlich ausgebildet sein. Insbesondere können Spiele mit steuerbaren Avataren Verwendung finden, die von dem Pflegegerät her interaktiv insbesondere hinsichtlich ihrer Bewegungen gesteuert werden können. Grundsätzlich können hierbei verschiedene Funktionen und Darstellungsmodi veränderbar ausgebildet sein. Nach einer vorteilhaften Weiterbildung der Erfindung können an dem Pflegewerkzeug Navigationssteuermittel angebracht sein, mittels derer ein Avatar auf dem Display der Anzeigevorrichtung navigiert und über den Bildschirm bzw. den dort dargestellten Hintergrund geführt werden kann. Die Navigationssteuermittel können hierbei in Form eines händisch zu betätigenden Schaltmittels am Pflegegerät ausgebildet sein, und/oder Erfassungsmittel zur Erfassung eines Betriebsparameters des Pflegewerkzeugs umfassen, in Abhängigkeit dessen der Avatar auf dem Display navigiert wird. Beispielsweise kann in das Pflegewerkzeug ein Bewegungssensor, ein Neigungssensor und/oder ein Beschleunigungssensor eingebaut sein, dessen Signal in ein Navigationssignal für den Avatar des auf der Anzeigevorrichtung dargestellten Spiels transformiert wird.

Um eine gute Sichtbarkeit des interaktiv zu steuernden Bildschirminhalts zu erreichen, ist es von Vorteil, wenn die Anzeigevorrichtung ein Anzeigeelement, insbesondere ein Displaypaneel, aufweist, das von einer zumindest teilweise transparenten, sich über das Anzeigeelement hinweg erstreckenden Abdeckhaube abgedeckt ist. Eine solche Abdeckglocke kann das separat positionierbare und damit durch Herabfallen gefährdete Anzeigeelement vor Beschädigungen schützen, auch wenn dieses von Kindern beispielsweise fallen gelassen wird. Gleichzeitig wird eine gute Sichtbarkeit von verschiedenen Seiten und eine Heraushebung des Anzeigeelements erzielt, die auch ohne die freie Positionierbarkeit und separate Ausbildung des Displays Vorteile bringt. Insbesondere kann durch Abdecken des eigentlichen Anzeigeelements mittels einer gewölbten Abdeckglocke nach Art einer allseits bekannten "Schneekugel" ein interessanter, die Aufmerksamkeit von Kindern anziehender optischer Effekt erreicht werden, der es auch in ihrer Geschicktheit noch weniger entwickelten Kindern ermöglicht, die interaktive Steuerung des Bildschirminhalts handzuhaben.

Die genannte Abdeckhaube, unter der das Anzeigeelement eingebettet und von dieser das Anzeigeelement umschlossen ist, kann in Weiterbildung der Erfindung konvex über das Anzeigeelement gewölbt sein und insbesondere eine zumindest näherungsweise kalottenförmige Abdeckglocke bilden, die über dem Anzeigeelement sitzt. Hierzu wird eine vollständige Sichtbarkeit trotz Abdeckung des Anzeigeelements aus verschiedenen Blickrichtungen erzielt.

Ggf. kann in Weiterbildung der Erfindung das Anzeigeelement mehrere zu verschiedenen Blickrichtungen hin ausgerichtete Anzeigeabschnitte aufweisen, um eine mehrachsige Sichtbarkeit der interaktiv zu steuernden Darstellung zu ermöglichen. Beispielsweise können auf gegenüberliegenden Seiten angeordnete Anzeigeabschnitte vorgesehen sein, so dass die Anzeigekugel von beiden Seiten betrachtbar ist, wobei ggf. verschiedene Darstellungen anzeigbar sind, um beispielsweise einen Wettkampf zweier Spieler zu ermöglichen. Vorzugsweise sitzt die genannte Abdeckhaube auf einem unterseitig im Wesentlichen ebenen Bodenstück, mit dem die Anzeigevorrichtung abstellbar ist.

Zusätzlich zu der genannten separat ausgebildeten Anzeigevorrichtung kann das Pflegewerkzeug eine am Pflegewerkzeug selbst angebrachte Anzeigevorrichtung umfassen, beispielsweise um ergänzend zu der separat ausgebildeten Anzeigevorrichtung auf besondere Ereignisse hinzuweisen oder andere Informationen zu transportieren. In Weiterbildung der Erfindung kann das Pflegewerkzeug eine Anzeige umfassen, die von einer Steuervorrichtung in Abhängigkeit des Spieleablaufs auf der separaten Anzeigevorrichtung und/oder in Abhängigkeit eines Betriebsparameters des Pflegewerkzeugs selbst steuerbar ist. Beispielsweise kann die am Pflegewerkzeug selbst vorgesehene Anzeige dazu genutzt werden, um auf besonders interessante oder wichtige Spielsituationen an der separaten Anzeigevorrichtung hinzuweisen.

Die werkzeugseitige Anzeigevorrichtung kann grundsätzlich verschieden ausgebildet sein, wobei in Weiterbildung der Erfindung am Pflegewerkzeug selbst einfachere Anzeigemittel als an der separaten Anzeigevorrichtung vorgesehen sind. In vorteilhafter Weiterbildung der Erfindung kann das Pflegewerkzeug einen beleuchtbaren Gehäuseabschnitt aufweisen und/oder ein auf das Werkzeuggehäuse aufsetzbares Leuchtelement umfassen. Bei einem Pflegewerkzeug in Form einer Zahnbürste kann in Weiterbildung der Erfindung ein Leuchtring am stirnseitigen Ende des Handstücks vorgesehen sein, das in verschiedene Leuchtzustände wie beispielsweise ein Blinken und/oder in unterschiedliche Farben bringbar ist.

Wird die werkzeugseitige Anzeige in Weiterbildung der Erfindung in Abhängigkeit des Spielablaufs auf der separaten Anzeigevorrichtung gesteuert, kann beispielsweise dann, wenn das Spiel auf der separaten Anzeigevorrichtung einen Steuerbefehl als Eingabe erwartet oder benötigt, ein Signal auf der werkzeugseitigen Anzeige beispielsweise in Form eines Aufblinkens gegeben werden.

Das Anzeigeelement der separaten Anzeigevorrichtung ist vorteilhafterweise indes komplexer ausgebildet. Insbesondere ist ein elektronisches Anzeigepaneel beispielsweise in Form eines LCD-Bildschirms vorgesehen.

Nach einem weiteren Aspekt der vorliegenden Erfindung ist das Pflegewerkzeug und/oder die separate Anzeigevorrichtung an der Basisstation ortsfest, jedoch beweglich lagerbar. Die hierzu vorgesehene Lagervorrichtung kann grundsätzlich verschieden ausgebildet sein, beispielsweise ein Federlager umfassen, das durch Formänderung der Lagerfedern ein Wippen oder Schaukeln oder eine andere Bewegung der Anzeigevorrichtung und/oder des Pflegewerkzeugs an der Basisstation im gelagerten Zustand zulässt.

In Weiterbildung der Erfindung umfasst die bewegliche Lagervorrichtung zur beweglichen Lagerung der Anzeigevorrichtung und/oder des Pflegewerkzeugs an der Basisstation formangepasste Lagerflächen einerseits an der Anzeigevorrichtung oder dem Pflegewerkzeug und andererseits an der Basisstation sowie vorteilhafterweise magnetische Haltemittel zum magnetischen Halten der Anzeigevorrichtung und/oder des Pflegewerkzeugs an der Basisstation.

Insbesondere können die formangepassten Lagerflächen gegensinnig gekrümmte Lagerflächenpaare umfassen, wobei vorteilhafterweise zumindest eine formangepasste Lagerfläche als vorzugsweise mehrachsig gekrümmte, insbesondere eiförmige Wippfläche zum Verwippen des Pflegewerkzeugs und/oder der Anzeigevorrichtung in verschiedene Abstellpositionen ausgebildet ist, wobei vorteilhafterweise die genannten magnetischen Haltemittel eine Zentriervorrichtung zum Zentrieren der auf der Wippfläche ruhenden Anzeigevorrichtung bzw. des auf der Wippfläche ruhenden Pflegewerkzeugs und/oder eine Rückstellvorrichtung zur Rückstellung in eine neutrale Stellung nach Auslenkungen hieraus bilden.

Insbesondere kann ein als Zahnbürste ausgebildetes Pflegewerkzeug eine kalottenförmig bzw. eiförmig gekrümmte Stirnseite an einem Handstückende aufweisen, das in eine Aufnahmemulde an der Basisstation stellbar ist. Die magnetischen Haltemittel halten die Zahnbürsten in einer aufrechten, in der Lagerschale zentrierten Ruhestellung.

Die magnetischen Haltemittel können hierbei in Weiterbildung der Erfindung koaxial zu den zuvor beschriebenen induktiven Ladespulen angeordnet sein. Alternativ oder zusätzlich können die magnetischen Haltemittel auch von der Ladespule selbst gebildet sein, so dass der induktiv übertragene Ladestrom gleichzeitig Magnetkräfte in dem Pflegewerkzeug induziert, die auf das Pflegewerkzeug zentrierend und/oder haltend wirken, um dieses in einer vorzugsweise aufrechten Ladestellung zu halten. Hierdurch wirken die Ladeanschlüsse gleichzeitig als Anzeigemittel, die ein korrektes Platzieren auf der Basisstation anzeigen. Wird das Pflegewerkzeug falsch abgestellt, so dass kein Ladestrom fließt, fällt das Pflegewerkzeug um bzw. wird nicht in seiner bestimmungsgemäßen Ruhestellung gehalten. Insofern kann auch das Abstellen des Pflegewerkzeugs als Teil bzw. Ergänzung und Fortsetzung des interaktiven Spiels dienen, das auf dem Bildschirm der Anzeigevorrichtung gespielt wird. Nach einem weiteren vorteilhaften Aspekt der vorliegenden Erfindung kann die Anzeigevorrichtung eine Doppelfunktion erfüllen und einen elektronischen Bilderrahmen bilden, in den von einer anschließbaren Bilderquelle unabhängig von der Zahnputzvorrichtung Bilder einspielbar und anzeigbar sind.

Diese und weitere Merkmale gehen außer aus den Ansprüchen auch aus den Zeichnungen und der nachfolgenden Beschreibung hervor, mittels derer anhand der Zeichnungen bevorzugte Ausführungen der Erfindung erläutert werden, wobei die Merkmale für sich oder in Unterkombination unabhängig von ihrer Zusammenfassung in den Ansprüchen den Gegenstand der vorliegenden Erfindung bilden können. In den Zeichnungen zeigen:
- Fig. 1:: eine schematische Darstellung eines Körperpflegegeräts in Form einer Zahn- putzvorrichtung, die eine Zahnbürste sowie eine Anzeigevorrichtung zur Anzeige eines interaktiv steuerbaren Zahnputzspiels umfasst, die beide auf einer Basis- station geladen werden können,
- Fig. 2:: eine schematische Darstellung des Ablaufs des interaktiv steuerbaren Zahnputz- spiels auf dem Bildschirm der Anzeigevorrichtung, wobei die genannte Anzeige- vorrichtung in mehreren Darstellungen zu verschiedenen Zeitpunkten des Spiels dargestellt ist,
- Fig. 3:: eine schematische Ansicht der auf der Basisstation abgestellten Zahnbürste, die deren Verwippbarkeit auf der Basisstation zur Verdeutlichung der magnetisch arbeitenden Haltemittel zeigt, und
- Fig. 4:: eine ausschnittsweise Darstellung eines händisch betätigbaren Navigations- schalters an der Zahnbürste zur Steuerung des Avatars des interaktiv steuerba- ren Spiels.

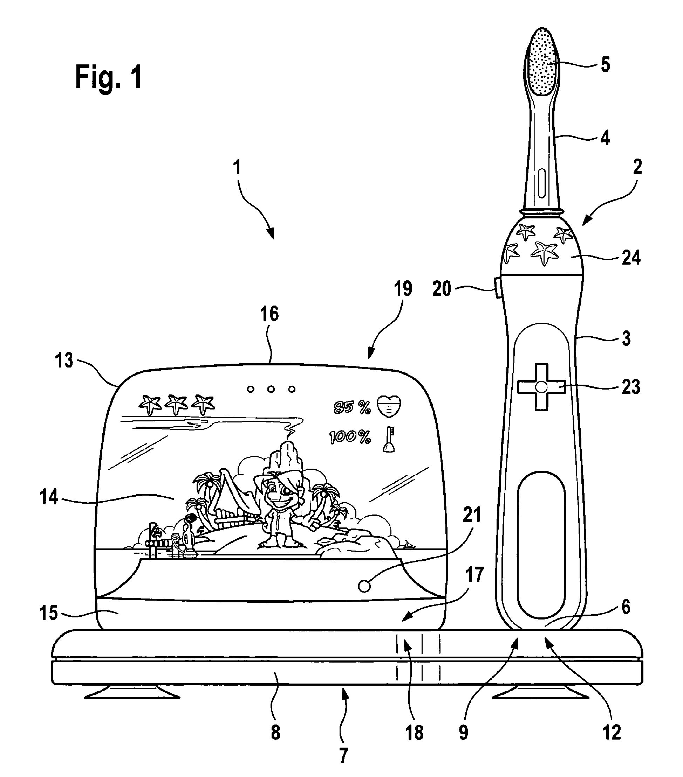

Die in Fig. 1 gezeigte Zahnputzvorrichtung 1 umfasst eine elektrische Zahnbürste 2, die ein ein Griffstück bildendes Handteil 3 sowie ein daran lösbar befestigtes Aufsatzteil 4 umfasst, das in der gezeichneten Ausführungsform eine Aufsatzbürste mit einem Borstenfeld 5 ist, ggf. aber auch andere Reinigungselemente wie Kunststoffstreifen, Interdentalreiniger oder dergleichen aufweisen kann.

Im Inneren des Handteils 3 ist ein Antriebsmotor untergebracht, der über einen geeignet ausgebildeten Antriebsstrang das Borstenfeld 5 des Aufsatzteils 4 antreiben kann. Weiterhin sind im Inneren des Handteils 3 ein Energiespeicher in Form eines Akkus vorgesehen, der über einen Ladeanschluss 6 ladbar ist. Der genannte Ladeanschluss 6 befindet sich vorteilhafterweise an einem hinteren Endabschnitt des Handteils 3, mit dem dieser auf einer Basisstation 7 abgelegt bzw. abgestellt werden kann, um einerseits im Nichtbetrieb aufgeräumt zu sein und andererseits geladen werden zu können.

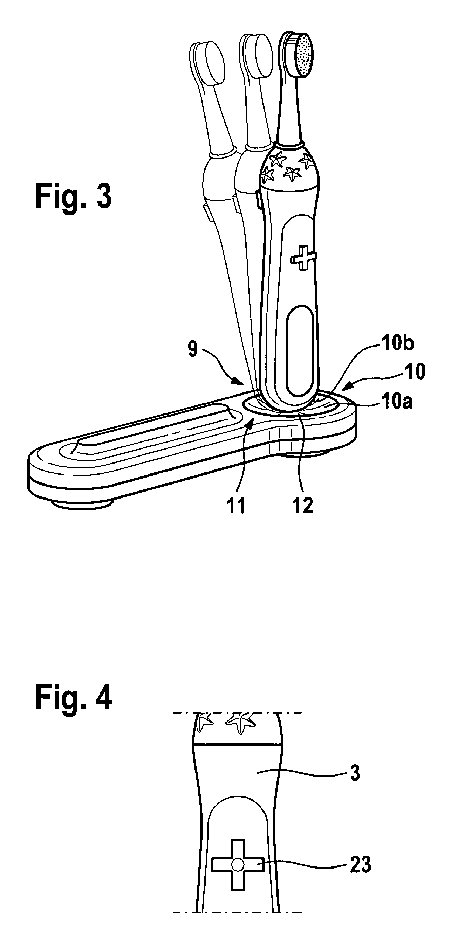

Wie Fig. 3 zeigt, steht die Zahnbürste 3 aufrecht auf dem im Wesentlichen nach Art einer flachen Platte ausgebildeten Stationskorpus 8 der Basisstation 7, wobei nach einer vorteilhaften Ausführung der Erfindung der aufrechte Stand ohne einen, insbesondere verriegelnden bzw. umschließenden, Formschluss oder dergleichen erzielt wird, so dass die aufrecht stehende Zahnbürste 2 bewegbar gelagert ist und insbesonder (wie ein Stehaufmännchen) hin und her wippen kann, wie dies Fig. 3 verdeutlicht.

Hierzu sind einerseits als Lagermittel 9 ein formangepasstes Lagerflächenpaar 10 vorgesehen, die ein jeweils mehrachsig gekrümmtes Wippflächenpaar bildet, dessen Flächenstücke sich aneinander anschmiegen. Konkret ist in der gezeichneten Ausführungsform die Lagerfläche 10a des Stationskorpus 8 in Form einer rotationssymmetrischen Mulde ausgebildet, während das stirnseitige Ende des Handteils 3 der Zahnbürste 2 ein eiförmiges bzw. kalottenförmig oder in anderer Weise rotationssymmetrisch konvex gewölbtes Flächenstück bildet, das sich in die genannte Lagermulde 10a einschmiegt. Vorteilhafterweise kann eine der Lagerflächen 10a bzw. 10b oder auch beide eine Abflachung aufweisen, um einen zentrierten Stand zu ermöglichen.

Um die abgestellte Zahnbürste 2 in ihrem aufrechten Stand zu halten, sind im Bereich der Lagermittel 9 zwischen der Zahnbürste 2 und der Basisstation 7 wirkende magnetische Haltemittel 11 vorgesehen, die zentrierend wirken und die genannte Zahnbürste 2 in ihrer senkrecht stehenden Ruhestellung halten. Die genannten magnetischen Haltemittel 11 können hierbei einen Permanentmagneten in der Basisstation 7 enthalten, der auf ein metallisches Lagerelement beispielsweise in Form eines Lagerrings im Endstück des Handteils 3 wirkt. Die magnetischen Haltemittel 11 sind dabei vorteilhafterweise derart ausgebildet, dass auf den Handteil 3 ein rückstellendes Moment wirkt, wenn der Handteil 3 aus seiner zentrierten Sollstellung ausgelenkt ist bzw. wird. Diese Rückstellvorrichtung wird in der gezeichneten Ausführung von den magnetischen Haltemitteln 11 gebildet.

Die Zahnbürste 2 wird dabei von dem Basisteil 7 her vorteilhafterweise induktiv geladen. Dabei ist der Ladeanschluss 6 des Handteils 3 induktiv arbeitend ausgebildet ebenso wie ein an der Basisstation 7 vorgesehener, damit zusammenwirkender Ladeanschluss 12. Beide Ladeanschlüsse 6 und 12 sind vorteilhafterweise zur Umgebung hin abgedeckt bzw. gekapselt. Insbesondere können sie unter dem Gehäuse des Handteils 3 bzw. der Basisstation 7 angeordnet sein, so dass ein berührungsloses Übertragen des Ladestroms erfolgt. Damit die Magnetfelder der Standeinrichtung sich nicht mit dem elektromagnetischen Wechselfeld gegenseitig abschwächend überlagern können beide Einrichtungen "verschachtelt" zueinander angeordnet sein. Z.B. ist in einer Variante der Standmagnet so ausgebildet, dass dieser die Induktionspulen für die elektromagnetische Kopplung (zur Übertragung des Ladestromes) umschließt. Auch eine umgekehrte Anordnung mit den Standmagneten umschließender Spule ist in einer weiteren Variante vorgesehen. Der Standmagnet ist in der Basisstation oder/und im unteren Abschnitt des Handgriffes angeordnet. Dieser Gegenstand der induktiven Energieübertragung mit Standmagnet ist beliebig mit anderen Ausführungsformen kombinierbar und kann auch unabhängiger Gegenstand der Erfindung sein.

Die Basisstation 7 dient weiterhin als Ablage für eine Anzeigevorrichtung 13, die vorteilhafterweise ein elektronisches Anzeigeelement 14 in Form eines Bildschirms bzw. Displays umfasst, das beispielsweise als LCD-Bildschirm ausgebildet sein kann.

Die genannte Anzeigevorrichtung 13 ist hierbei separat von der Basisstation 7 als Stand-alone-Einheit ausgebildet, die an die Basisstation 7 angedockt werden kann, um von Letzterer geladen zu werden, aber auch von der Basisstation 7 entfernt separat betrieben werden kann.

In der gezeichneten Ausführungsform umfasst die Anzeigevorrichtung 13 hierbei einen Basiskorpus 15, der den Boden der Anzeigevorrichtung 13 bildet und das genannte Anzeigeelement 14 trägt. Über das genannte Anzeigeelement 14 ist in vorteilhafter Ausbildung der Erfindung eine transparent Abdeckglocke 16 gestülpt, die das Anzeigeelement 12 abdeckt bzw. einkapselt und vorteilhafterweise fluiddicht mit dem genannten Basiskorpus 15 verbunden ist, so dass das Anzeigeelement 12 unter der Abdeckglocke 13 eingebettet ist.

Zur Energieversorgung des Anzeigeelements 14 ist in den Basiskorpus 15 ein Energiespeicher in Form eines Akkus integriert, der über einen Ladeanschluss 17 von der Basisstation 7 her ladbar ist. Vorteilhafterweise sind auch hier der Ladeanschluss 17 an der Anzeigevorrichtung 13 sowie der damit zusammenwirkende Ladeanschluss 18 der Basisstation 7 induktiv arbeitend ausgebildet, so dass der Ladestrom berührungslos übertragen werden und die Ladeanschlüsse 17 bzw. 18 gegen Feuchtigkeit eingebettet, insbesondere unter dem Gehäuse des jeweiligen Teils abgedeckt sein können.

Wie Fig. 1 zeigt, bildet die Unterseite des Basiskorpus 15 der Anzeigevorrichtung 13 eine Aufstandsfläche, mit der die Anzeigevorrichtung 13 auf einer beliebigen ebenen Fläche abgestellt werden kann.

Mittels einer nicht eigens gezeigten Kommunikationsschnittstelle 19 kann die Anzeigevorrichtung 13 mit der Zahnbürste 2 kommunizieren. Zur drahtlosen Kommunikation ist hierbei an der Anzeigevorrichtung 13 ein Sender/Empfänger-Baustein vorgesehen, mit dem ein entsprechender Sender/Empfänger-Baustein am Handteil 3 der Zahnbürste kommunizieren kann, wobei vorteilhafterweise Daten in beide Richtungen übertragen werden können. Beispielsweise kann eine Bluetooth-Schnittstelle an der Anzeigevorrichtung 13 sowie der Zahnbürste 2 vorgesehen sein, um eine Bluetooth-Verbindung zwischen beiden Teilen aufzubauen.

Die Anzeigevorrichtung 13 weist weiterhin eine Steuervorrichtung 20 auf, die die Darstellungen auf dem Anzeigeelement 12 steuert und von dem Handteil 3 der Zahnbürste 2 erhaltene Steuerbefehle in entsprechende Grafikbefehle für die Bildschirmdarstellung umsetzt.

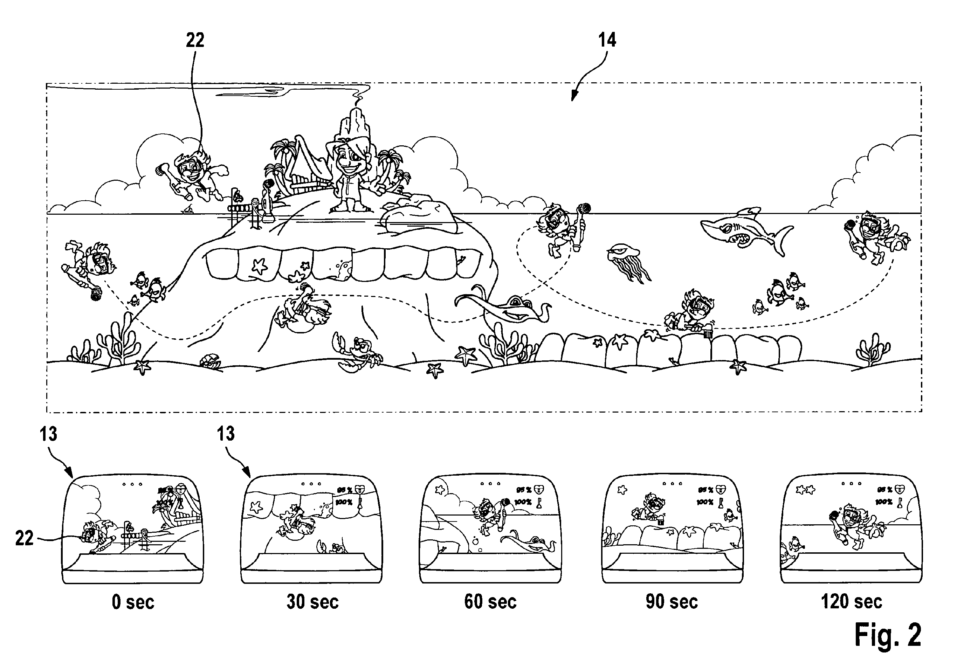

Insbesondere kann die genannte Steuervorrichtung 21 ein Videospiel auf dem Anzeigeelement 14 darstellen und interaktiv steuern, so wie dies in Fig. 2 exemplarisch dargestellt ist.

Vorteilhafterweise wird auf dem Anzeigeelement 14 zumindest ein Avatar 22 und/oder ein virtuelles Element dargestellt, das über den Bildschirm bewegbar bzw. führbar und/oder über den Bildschirmhintergrund bewegbar und führbar ist. In der gezeichneten Ausführung wird der Avatar 22 von einer Kinderfigur gebildet, die über eine Insel sowie in der Unterwasserwelt vor der Insel bewegbar ist, um ein unter Wasser liegendes Riff, das die Zähne eines zu reinigenden Gebisses versinnbildlicht, zu reinigen.

Der genannte Avatar 22 kann hierbei durch die Zahnbürste 2 über die Bildschirmdarstellung bzw. das Anzeigeelement 14 navigiert werden. Hierzu umfasst der Handteil 3 der Zahnbürste 2 Navigationssteuermittel zur Erzeugung von Navigationsbefehlen, die über die genannten Kommunikationsschnittstelle 19 bzw. 20 auf die Steuervorrichtung 21 übertragen werden und die Bewegung des Avatars 22 auf dem Anzeigeelement 14 steuern. In der gezeichneten Ausführung gemäß Fig. 4 umfassen hierbei die genannten Navigationssteuermittel einen händisch betätigbaren Navigationsschalter 23, der grundsätzlich verschieden ausgebildet sein kann und beispielsweise nach Art eines an Laptops bekannten Mouseballs gestaltet sein kann, der Betätigungen bzw. Kraftbeaufschlagungen in verschiedenen Richtungen erkennt und in Navigationssteuersignale verschiedener Richtungen umsetzt.

Um Kindern die Navigation des Avatars 22 zu vereinfachen, ist der Navigationsschalter 23 am Handteil 3 vorteilhafterweise als Vierfachdruckschalter ausgebildet, der in vier Richtungen orientierte Druckabschnitte aufweist, die vorteilhafterweise nach Art eines Kreuzes zueinander positioniert sind. Durch Niederdrücken eines oder auch zweier nebeneinander liegender Druckabschnitte kann ein in die entsprechende Richtung gehendes, ggf. auch überlagertes Navigationssteuersignal erzeugt werden, das in eine Bewegung des Avatars in die entsprechende Richtung umgesetzt wird. Hierbei kann eine feste Richtungszuordnung zwischen den Druckabschnitten und dem Bildschirm vorgegeben sein, beispielsweise dergestalt, dass das Niederdrücken des zum Aufsatzteil 4 hin gerichteten Druckabschnitts stets eine Bewegung des Avatars 22 nach oben zum oberen Bildschirmrand hin usw. bewirkt. Alternativ kann die Richtungszuordnung auch von der Ausrichtung der in der virtuellen Darstellung gezeigten Bürste abhängen, so dass die virtuelle Darstellung der Bürste ungeachtet ihrer Drehstellung im Bildschirm beispielsweise stets nach rechts quer zur Längsachse der virtuellen Bürstendarstellung bewegt wird, wenn der an der echten Zahnbürste rechts liegende Druckabschnitt niedergedrückt wird. Dies ist jedoch ein komplexeres Steuerverfahren, das weniger für Kinder geeignet ist, gleichwohl jedoch den Spielanreiz für Erwachsene erhöhen kann. Alternativ ist der Navigationsschalter 23 ein Taster, der zu betätigen ist, sobald bestimmte Positionen/Konfigurationen auf dem Display zu erkennen sind. Weiter alternativ ist der Navigationsschalter 23 auch als Ein/Aus Schalter der elektrischen Zahnbürste (z.B. mit längerer Andrückzeit, um die Zahnbürste Ein und Auszuschalten als zum bedienen der Displayfunktionen. In weiterer Alternative sind der Ein/Aus-Schalter der elektrischen Zahnbürste und der Navigationsschalter 23 separat, vorzugsweise an zwei gegenüberliegenden oder sonstigen Seiten des Zahnbürstenhandgriffes ausgebildet.

Alternativ oder zusätzlich zu dem genannten händisch betätigbaren Navigationsschalter 23 können Navigationssteuersignale an dem Handteil 3 auch aus Betriebsparametern der Zahnbürste 2 abgeleitet werden. Insbesondere können mittels geeigneter Erfassungsvorrichtungen beispielsweise in Form von Bewegungs- und/oder Beschleunigungssensoren Bewegungs- bzw. Beschleunigungssignale erzeugt werden, die den Bewegungen, insbesondere Putzbewegungen der Zahnbürste 2 entsprechen, so dass die virtuelle Darstellung des Avatars 22 und/oder des von diesem gehaltenen virtuellen Bürstenteils entsprechend den tatsächlichen Bewegungen der Zahnbürste 2 navigiert wird. Vorteilhafterweise kann in die Zahnbürste 2 auch ein Neigungssensor integriert sein, der die Neigung bzw. Orientierung der Zahnbürste 2 im Raum erfasst, so dass der Avatar 2 nicht nur hin und her bewegt, sondern auch verkippt werden kann. Vorteilhafterweeise wird die Bildschirmdarstellung des Avatars 22 synchron mit den Bewegungen und/oder Druckschalterbetätigungen an der Zahnbürste 2 bewegt.

## Patentansprüche

1. Körperpflegegerät des persönlichen Bedarfs, insbesondere Zahnputzvorrichtung, mit einem handführbaren Pflegewerkzeug, insbesondere Zahnbürste (2), einer Basisstation (7) zum Ablegen und/oder Laden des Pflegewerkzeugs, sowie einer Anzeigevorrichtung (13) zur Anzeige von interaktiven Darstellungen, die mittels einer Steuervorrichtung (21) von dem Pflegewerkzeug her interaktiv steuerbar sind, **dadurch gekennzeichnet, dass** die Anzeigevorrichtung (13) einen von der Basisstation (7) und dem Pflegewerkzeug separat ausgebildeten und separat positionierbaren Baustein bildet und eine Kommunikationsschnittstelle (19) zur Kommunikation mit der Basisstation (7) und/oder mit dem Pflegewerkzeug auch im hiervon separaten Zustand aufweist.

2. Körperpflegegerät nach dem vorhergehenden Anspruch, wobei die Anzeigevorrichtung (13) einen ladbaren Energiespeicher besitzt, wobei an der Anzeigevorrichtung (13) und der Basisstation (7) miteinander in Wirkverbindung bringbare, vorzugsweise berührungslose, Ladeanschlüsse (17,18) zum Laden der Anzeigevorrichtung (13) vorgesehen sind.

3. Körperpflegegerät nach dem vorhergehenden Anspruch, wobei sowohl die Anzeigevorrichtung (13) als auch das Pflegewerkzeug an der Basisstation (7) ladbar sind, wobei vorzugsweise die Basisstation (7) zumindest zwei Ladeanschlüsse (12,18) zum gleichzeitigen Laden der Anzeigevorrichtung (13) und des Pflegewerkzeugs aufweist.

4. Körperpflegegerät nach einem der vorhergehenden Ansprüche, wobei die Anzeigevorrichtung (13) einen induktiven Ladeanschluss (17) zum induktiven Laden durch die Basisstation (7) aufweist.

5. Körperpflegegerät nach einem der vorhergehenden Ansprüche, wobei das Pflegewerkzeug einen ladbaren Energiespeicher sowie einen induktiven Ladeanschluss (12) zum induktiven Laden des Energiespeichers durch die Basisstation (7) aufweist.

6. Körperpflegegerät nach einem der vorhergehenden Ansprüche, wobei die Anzeigevorrichtung (13) Aufstandsmittel zum Abstellen auf einer ebenen Fläche sowie an die Basisstation (7) formangepasste Lagermittel zur Lagerung der Anzeigevorrichtung (13) an der Basisstation (7) aufweist.

7. Körperpflegegerät nach einem der vorhergehenden Ansprüche, wobei die Anzeigevorrichtung (13) einen Spielecontroller zur Steuerung eines an der Anzeigevorrichtung (13) anzeigbaren Videospieles enthält, an den über die Kommunikationsschnittstelle (19) von dem Spielecontroller verarbeitbare Spielsteuerbefehle sendbar sind.

8. Körperpflegegerät nach einem der vorhergehenden Ansprüche, wobei ein Spielecontroller zur Steuerung eines an der Anzeigevorrichtung (13) anzeigbaren Videospiels an der Basisstation (7) und/oder dem Pflegewerkzeug vorgesehen ist, von dem aus Graphiksteuerbefehle über die Kommunikationsschnittstelle (19) an die Anzeigevorrichtung (13) sendbar sind.

9. Körperpflegegerät nach dem Oberbegriff des Anspruchs 1 oder einem der vorhergehenden Ansprüche, wobei die Anzeigevorrichtung (13) ein Anzeigeelement (14), insbesondere -paneel, aufweist, dass von einer teilweise transparenten Abdeckhaube (16) abgedeckt ist.

10. Körperpflegegerät nach dem vorhergehenden Anspruch, wobei die Abdeckhaube (16) konvex, vorzugsweise kalottenförmig über das Anzeigeelement (14) gewölbt ist, insbesondere eine Abdeckglocke bildet, unter der das Anzeigeelement (14) eingebettet und eingekapselt ist.

11. Körperpflegegerät nach einem der beiden vorhergehenden Ansprüche, wobei das Anzeigeelement (14) mehrere zu verschiedenen Blickrichtungen hin ausgerichtete Abschnitte aufweist.

12. Körperpflegegerät nach dem Oberbegriff des Anspruchs 1 oder einem der vorhergehenden Ansprüche, wobei das Pflegewerkzeug und/oder die Anzeigevorrichtung (13) eine an die Basisstation (7) formangepasste Lagerfläche (10b) zum beweglichen Abstellen des Pflegewerkzeugs und/oder der Anzeigevorrichtung (13) auf der Basisstation (7) sowie Rückstellmittel zur Rückstellung des abgestellten Pflegewerkzeugs und/oder der abgestellten Anzeigevorrichtung nach einer Auslenkung aus der Sollstellung zurück in die Sollstellung auf der Basisstation (7) vorgesehen sind.

13. Körperpflegegerät nach dem vorhergehenden Anspruch, wobei die Rückstellmittel von magnetischen Haltemitteln (11) zum Halten des Pflegewerkzeugs und/oder der Anzeigevorrichtung (13) an der Basisstation (7) gebildet sind.

14. Körperpflegegerät nach einem der beiden vorhergehenden Ansprüche, wobei die formangepasste Lagerfläche (10b) als vorzugsweise mehrachsig gekrümmte, insbesondere rotationssymmetrische, vorzugsweise etwa eiförmige, Wippfläche zum Verwippen des Pflegewerkzeugs und/oder der Anzeigevorrichtung (13) in verschiedene Abstellpositionen ausgebildet ist und die Rückstellvorrichtung derart ausgebildet ist, dass bei Auslenkung des Pflegewerkzeugs und/oder der Anzeigevorrichtung (13) aus der Wippmittelstellung ein Rückstellmoment auf das Pflegewerkzeug und/oder die Anzeigevorrichtung (13) erzeugt wird.

15. Körperpflegegerät nach einem der beiden vorhergehenden Ansprüche, wobei der induktive Ladeanschluss (6) und die magnetisch wirkenden Haltemittel (11) koaxial zueinander an einem stirnseitigen Ende eines Handteils (3) des Pflegewerkzeugs angeordnet sind.

16. Körperpflegegerät nach dem Oberbegriff des Anspruchs 1 oder einem der vorhergehenden Ansprüche, wobei die Anzeigevorrichtung (13) einen elektronischen Bilderrahmen bildet, der einen separaten Bilddatenanschluss zum Anschließen einer externen Bilddatenquelle besitzt.

17. Körperpflegegerät nach dem vorhergehenden Anspruch, wobei die Anzeigevorrichtung (13) einen Sequenzsteuerbaustein zum automatischen Weiterschalten des jeweils angezeigten Bildes, das aus der Bilddatenquelle einspeisbar ist, aufweist.

18. Körperpflegegerät nach einem der vorhergehenden Ansprüche, wobei das Pflegewerkzeug eine zusätzliche Anzeigevorrichtung (24) aufweist, die in Abhängigkeit eines Ereignisses, insbesondere eines Spielablaufs an der separat ausgebildeten Anzeigevorrichtung (13), und/oder in Abhängigkeit eines Betriebsparameters des Pflegewerkzeugs gesteuert ist.

19. Körperpflegegerät nach dem vorhergehenden Anspruch, wobei die an dem Pflegewerkzeug vorgesehene Anzeigevorrichtung (24) ein beleuchtbares Anzeigeelement, insbesondere beleuchtbaren Anzeigering, an dem Handteil (3), vorzugsweise einem stirnseitigen Ende des Handteils (3) des Pflegewerkzeugs aufweist.

20. Körperpflegegerät nach dem Oberbegriff des Anspruchs 1 oder einem der vorhergehenden Ansprüche, wobei das Pflegewerkzeug Navigationssteuermittel zur Navigation eines virtuellen Bildschirmelements, und/oder Avatars (22) über die Anzeigevorrichtung (13) und/oder über das darauf dargestellte Hintergrundbild aufweist.

21. Körperpflegegerät nach dem vorhergehenden Anspruch, wobei die Navigationssteuermittel einen händisch betätigbaren Navigationsschalter (23) umfassen, der vorteilhafterweise mehrere zu verschiedenen Richtungen hin angeordnete Druckabschnitte zur Erzeugung von in verschiedene Richtungen weisenden Navigationssteuersignalen aufweist.

22. Körperpflegegerät nach einem der beiden vorhergehenden Ansprüche, wobei die Navigationssteuermittel Verschiebemittel zum translatorischen Verschieben des Avatars (22) und Rotationsmittel zum Verdrehen des Avatars (22) aufweist, wobei vorzugsweise die Verschiebemittel und die Rotationsmittel unabhängig voneinander, ggf. aber gleichzeitig betätigbar ausgebildet sind.
